# EUROPEAN PATENT SPECIFICATION

(11) **EP 0 830 422 B1**
(45) Date of publication and mention of the grant of the patent: **15.03.2000**
(21) Application number: 96916370.8
(22) Date of filing: 05.06.1996
(51) Int. Cl.: C08K 5/07, C08L 67/08, C08G 63/91

(54) **BINDER COMPOSITION COMPRISING A STRONGLY ACTIVATED CARBANION-FUNCTIONAL POLYMER AND A CROSS-LINKER**
BINDERZUSAMMENSETZUNG, UMFASSEND EIN STARK AKTIVIERTES CARBANION-FUNKTIONELLES POLYMER UND EINEN VERNETZER
COMPOSITION DE LIANT COMPRENANT UN POLYMERE FORTEMENT ACTIVE PORTANT DES FONCTIONS CARBANION ET UN AGENT DE RETICULATION

(30) Priority: 09.06.1995 NL 1000534
(43) Date of publication of application: 25.03.1998
(73) Proprietor: DSM N.V., 6411 TE Heerlen (NL)
(72) Inventor: HENDRIKS, Johannes, Wilhelmus, Maria, NL-8016 DB Zwolle (NL)
(86) International application number: NL9600221
(87) International publication number: WO9641833

(56) References cited:
- EP-A- 0 227 454
- EP-A- 0 570 213
- GB-A- 1 067 232
- GB-A- 2 213 157
- PATENT ABSTRACTS OF JAPAN vol. 95, no. 012 & JP,A,07 331116 (SHINTO PAINT CO LTD), 19 December 1995,

## Description

The invention relates to a binder composition comprising a strongly activated carbanion-functional polymer and a crosslinker.

A binder composition of this type is disclosed in EP-A-227454. In this disclosure an acetoacetate-modified polymer is crosslinked with use of a Michael addition reaction with poly-α,β-unsaturated esters. Binder compositions which are cured by means of Michael addition reactions generally yields coatings that are slow drying and unacceptably yellow.

One object of the invention is to provide binder compositions comprising a strongly activated carbanion-functional polymer, especially an alkyd resin or a polyester resin, and a crosslinker that quickly dry.

The invention is characterized in that the binder composition is an aqueous emulsion, the crosslinker contains aldehyde groups, the polymer is an alkyd resin or a polyester resin and the carbanion-functional groups are acetoacetate groups, malonate groups, acetonate groups or mixtures thereof.

In this way quicker drying of binder compositions comprising a strongly activated carbanion-functional polymer is achieved.

It is another advantage of the present invention that coatings based on binder compositions according to the invention show less yellowing.

Preferably, the aldehydes have (1-20) carbon atoms.

Generally the crosslinker contains aldehydes having (1-4) aldehyde groups, more preferably (1-2) aldehyde groups.

Examples of suitable aldehydes include formaldehyde, cinnamaldehyde and polyaldehydes, such as for instance, glutardialdehyde.

Preferably, a mixture of formaldehyde and glutardialdehyde is used. The molar ratio of formaldehyde to glutardialdehyde can be, for example, between about 70:30 and about 30:70 and preferably, between about 55:45 and about 45:55.

A strongly activated carbanion-functional polymer is understood to be a polymer backbone modified with one or more, acetoacetate, malonate, acetonate groups or mixtures thereof.

The polymer backbone comprises a polyester resin or an alkyd resin. These polymer matrices can comprise mixtures of polymers. Preferably they contain more than 50% by weight of a polyester or an alkyd resin.

Preferably, the alkyd resin has, after transesterification with the strongly activated carbanion groups, a hydroxyl number between about 40 and about 70 mg of KOH/gram of resin and an acid number of between 15 and 25 mg of KOH/gram of resin. Alkyd resins can be obtained from polyols, dicarboxylic acids or dicarboxylic acid derivatives and fatty acids, as described in, for example, EP-A-227454.

Preferably, unsaturated fatty acids, such as for example, tall oil fatty acid (TOFA) and soy oil fatty acid (SOFA), are incorporated into the alkyd resin.

Examples of suitable dicarboxylic acids or dicarboxylic acid derivatives include phthalic anhydride, maleic anhydride and corresponding dicarboxylic acids thereof.

Examples of suitable polyols include trimethylol propane, trimethylol ethane, cyclohexane dimethanol, 1,6-hexanediol, hexane-2,5-diol, neopentyl glycol, ethylene glycol, diethylene glycol, propylene glycol, 1,2-butanediol, 1,3-butanediol, 1,4-butanediol, mono- or disorbitol, mono- or dipentaerythritol, trishydroxyethylisocyanurate, glycerol, polypropylene glycol, polyethylene glycol and polytetrahydrofuran.

Preferably, acetoacetate groups are used such as for example methyl acetoacetate, ethyl acetoacetate, isopropyl acetoacetate, butyl acetoacetate, t-butyl acetoacetate, methyl benzyl acetoacetate and/or dodecyl acetoacetate.

The transesterification reaction of the acetoacetate groups on the polymer can take place under usual conditions as described in, for example, EP-A-227454. The catalyst for this reaction can be for example p-toluene sulphonic acid.

The amount of strongly activated carbanion groups incorporated into the polymer can be for example between about 5 and about 15 wt.%, relative to the modified polymer.

In general, the molar ratio of the carbanion groups to the aldehyde groups is between about 1:5 and about 5:1, and preferably between about 1:1 and about 3:1 and more preferably between about 1:1 and about 2:1.

The binder composition according to the invention is used in an aqueous emulsion because binder compositions comprising a strongly activated carbanion-functional polymer and a crosslinker may form a gel in an organic solution. Moreover, the presence of solvents is undesirable in view of current environmental requirements.

The strongly activated carbanion-functional polymer can be emulsified in water by addition of an emulsifier and/or by neutralization of the acid groups in the alkyd resin. In general, the polymer is emulsified at temperatures of between about 0°C and about 100°C, preferably at a temperature of between about 25°C and about 75°C.

According to a further preferred embodiment of the invention the emulsifying temperature is between about 58°C and about 62°C.

In general the particle size of the emulsion is between 100 and 1000 nm, preferably between 200 and 600 nm.

An aldehyde compound can subsequently be added to the strongly activated carbanion-functional polymer at for example room temperature as a crosslinker.

The binder compositions according to the present invention can be used, for example, as a one-component system for coatings that cure at temperatures between about 0°C and about 100°C, preferably for coatings that cure at about 25°C or room temperature.

The binder compositions according to the present invention can be mixed with the usual additives to obtain coatings. Examples of these additives include pigments, colorants, fillers, thickeners, flow-promoting agents, matting agents, stabilizers and/or siccatives.

The substrate material to be coated is not particularly limited but exemplary substrates include glass, plastic, wood and metal substrates.

The invention will be explained further by reference to the following experiments and examples.

### Examples

### Experiment I

### Preparation of an alkyd resin with incorporated acetoacetate groups

1399 parts by weight of tall oil fatty acid, 857 parts by weight of phthalic anhydride and 744 parts by weight of pentaerythritol were mixed and reacted at 240 °C until a resin with an acid number of about 20 mg of KOH/gram of resin was obtained. The mixture was cooled to 160°C, 530 parts by weight of methylacetoacetate were added and methanol was distilled off for 2 hours. After the transesterification had been finished all volatile components were distilled off in a vacuum.

The characteristics of this resin are given . in Table 1.

### Comparative Experiment A

### Preparation of an alkyd resin without acetoacetate groups

1238 parts by weight of tall oil fatty acid, 1107 parts by weight of phthalic anhydride and 655 parts by weight of glycerol were reacted at 220°C until the acid number was 20 mg KOH/gram resin. The characterization of this resin is given in Table 1.

**TABLE 1**

| | Alkyd resin according to Experiment I | Alkyd resin according to Experiment A |
|---|---|---|
| Acid number¹⁾ | 22.6 | 20.4 |
| Viscosity²⁾ | 0.7 dPa.s | 2.7 dPa.s |
| Alkyd constant | 0.981 | 0.981 |
| % Acetoacetate groups | 11.2 | - |
| Oil length | 46.5% | 46.5% |
| OH number | 62 | 60 |

| | | |
|---|---|---|
| 1) mg KOH/gram resin | | |
| 2) Resin diluted 1:1 in Xylene. 23°C. | | |

### Experiment II-III and Comparative Experiment B Preparation of resin emulsions

The resin emulsions are obtained by adding water very slowly to the resin/emulsifier/neutralizer mixture at a temperature of about 60°C in a ratio as illustrated in Table 2.

**Table 2**

| | II | B | III |
|---|---|---|---|
| | based on alkyd resin according to Exp. I | based on alkyd resin according to Exp. A | based on a 1:1 mixture of alkyd resins according to Exp. I and A |
| Resin¹⁾ | 1000 | 1000 | 1000 |
| Nonylphenol-20-ethylene oxide¹⁾ | 150 | 150 | 150 |
| NaOH, 10%¹⁾ | 71 | 120 | 96 |
| Water¹⁾ | 650 | 606 | 628 |

| Physical characteristics | | | |
|---|---|---|---|
| d₉₀ (nm) | 326 | 388 | 377 |
| pH | 5.6 | 5.6 | 5.9 |
| % SC²⁾ | 54.6 | 54.6 | 54.6 |

| | | | |
|---|---|---|---|
| 1) Parts by weight | | | |
| 2) % Sc = solids content | | | |

The particle size (d₉₀) of the emulsion was measured with the aid of a Coulter LS-130 apparatus.

### Examples

### Preparation of a binder composition comprising formaldehyde

2.5% by weight of a drier (Siccatol 938™ from Acros), and 5% by weight of a thickener (RM 1020™, Röhm & Haas) were added to the emulsions II, III and B. Next formaldehyde solutions were added to the emulsion as indicated in the following.

All emulsions used had a solids content of 54.6% by weight.

The coating composition were applied to a glass plate at room temperature at a thickness of 100µm. After evaporation of water and solvents a 20-50 µm dry coating layer was obtained.

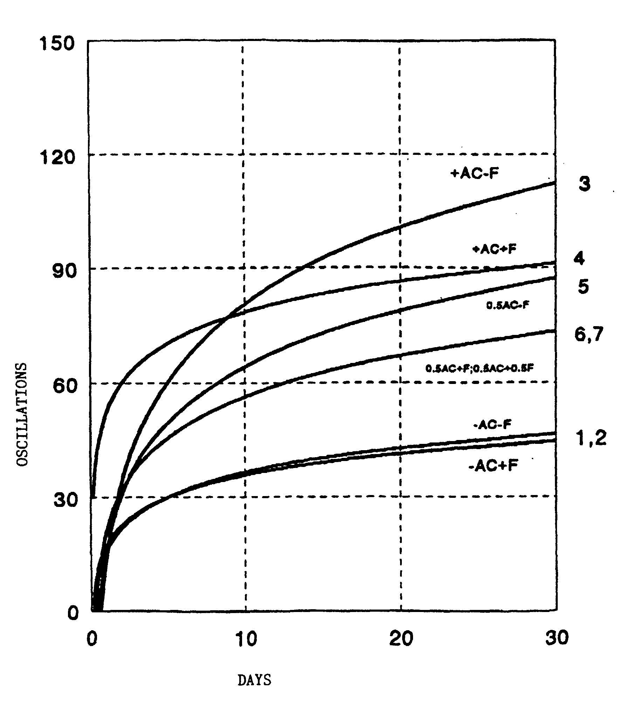

Figure 1 shows the hardness buildup (in terms of the number of pendulum oscillations) as a function of time (the number of days) for seven coatings based on the following compositions:
1) emulsion B (alkyd resin without acetoacetate groups) without formaldehyde (-AC-F)
2) emulsion B (alkyd resin without acetoacetate groups) with 1.6 g of 37% formaldehyde solution (-AC+F)
3) emulsion II (alkyd resin with 11.2% acetoacetate groups) without formaldehyde (+AC-F)
4) emulsion II (alkyd resin with 11.2% by weight acetoacetate groups) with 1.6 g of 37% formaldehyde solution (+AC+F)
5) emulsion III (alkyd resin with 5.6% by weight acetoacetate groups) without formaldehyde (0.5AC-F)
6) emulsion III (alkyd resin with 5.6% by weight acetoacetate groups) with 0.8 g of 37% formaldehyde solution (0.5AC+0.5F)
7) emulsion III (alkyd resin with 5.6% acetoacetate groups) with 1.6 g of 37% formaldehyde solution (0.5AC+F)

The hardness build-up was monitored by a measurement according to the König pendulum hardness test (DIN 53157).

These examples show that the coatings 4), 6) and 7) which are based on binder compositions comprising a polymer having acetoacetate groups and formaldehyde are immediately tackfree after evaporation of water.

Furthermore, the combination of formaldehyde and an acetoacetate-functional alkyd resin in emulsion results in a more rapid hardness buildup in the first stage of the drying process.

## Claims

1. A binder composition comprising a strongly activated carbanion-functional polymer and a crosslinker,
characterized in that the binder composition is an aqueous emulsion, the crosslinker contains aldehyde groups, the polymer is an alkyd resin or a polyester resin and the carbanion-functional groups are acetoacetate groups, malonate groups, acetonate groups or mixtures thereof.

2. A binder composition according to Claim 1, characterized in that the polymer is an alkyd resin having said carbanion-functional groups and having a hydroxyl number between 40 and 70 mg of KOH/gram of resin and an acid number between 15 and 25 mg of KOH/gram of resin.

3. A binder composition according to any one of Claims 1-2 characterized in that crosslinker contains aldehydes having (1-20) carbon atoms.

4. A binder composition according to any one of Claims 1-3, characterized in that the crosslinker is formaldehyde, glutardialdehyde or a mixture thereof.

5. A process for preparing a binder composition comprising the combination of steps of providing an alkyd resin having carbanion group, dispersing said alkyd resin in water to obtain an emulsion, and adding an aldehyde compound to said emulsion and wherein the emulsion has a particle size between 200 and 600 nm and the molar ratio of carbanion groups to said aldehyde groups is between 1:1 and 3:1.

6. Use of a binder composition according to any one of the Claims 1-4 or of a binder composition obtained using the process according to claim 6 in the preparation of coating compositions.

7. Coating based on a binder composition according to any one of the Claims 1-4 or coating based on a binder composition obtained using the process according to Claim 6.

8. Wholly or partially coated substrate wherein the coating according to Claim 7 is applied.

## Patentansprüche

1. Binderzusammensetzung, umfassend ein stark aktiviertes Carbanion-funktionelles Polymer und ein Vernetzungsmittel, dadurch gekennzeichnet, daß die Binderzusammensetzung eine wässerige Emulsion ist, das Vernetzungsmittel Aldehyd-Gruppen enthält, das Polymer ein Alkydharz oder ein Polyesterharz ist und die Carbanion-funktionellen Gruppen Acetoacetat-Gruppen, Malonat-Gruppen, Acetonat-Gruppen oder Gemische davon sind.

2. Binderzusammensetzung gemäß Anspruch 1, dadurch gekennzeichnet, daß das Polymer ein Alkydharz mit besagten Carbanionfunktionellen Gruppen und mit einer Hydroxylzahl zwischen 40 und 70 mg von KOH/Gramm Harz und einer Säurezahl zwischen 15 und 25 mg von KOH/Gramm Harz ist.

3. Binderzusammensetzung gemäß einem der Ansprüche 1-2, dadurch gekennzeichnet, daß das Vernetzungsmittel Aldehyde mit (1-20) Kohlenstoffatomen enthält.

4. Binderzusammensetzung gemäß einem der Ansprüche 1-3, dadurch gekennzeichnet, daß das Vernetzungsmittel Formaldehyd, Glutardialdehyd oder ein Gemisch davon ist.

5. Verfahren zum Herstellen einer Binderzusammensetzung, umfassend die Kombination von Schritten zum Vorsehen eines Alkydharzes mit Carbanion-Gruppen, Dispergieren besagten Alkydharzes in Wasser, um eine Emulsion zu erhalten und Zugeben einer Aldehyd-Verbindung zu besagter Emulsion und worin die Emulsion eine Teilchengröße zwischen 200 und 600 nm hat und das Molverhältnis von Carbanion-Gruppen zu besagten Aldehyd-Gruppen zwischen 1:1 und 3:1 ist.

6. Verwenden einer Binderzusammensetzung gemäß einem der Ansprüche 1-4 oder einer Binderzusammensetzung, erhalten unter Verwendung des Verfahrens gemäß Anspruch 6, bei der Herstellung von Überzugszusammensetzungen.

7. Überzug, basierend auf einer Binderzusammensetzung gemäß einem der Ansprüche 1-4 oder Überzug, basierend auf einer Binderzusammensetzung, erhalten unter Verwendung des Verfahrens gemäß Anspruch 6.

8. Ganz oder teilweise überzogenes Substrat, wobei der Überzug gemäß Anspruch 7 verwendet wird.

## Revendications

1. Une composition de liant comprenant un polymère fortement activé portant des fonctions carbanion et un agent de réticulation, caractérisée en ce que la composition de liant est une émulsion aqueuse, l'agent de réticulation contient des groupes aldéhydes, le polymère est une résine alkyde et les groupes portant des fonctions carbanion sont des groupes acétoacétate, des groupes malonates, des groupes acétonates ou des mélanges de cela.

2. Une composition de liant selon la revendication 1, caractérisée en ce que le polymère est une résine alkyde ayant lesdits groupes portant des fonctions carbanion et ayant un nombre hydroxyle compris entre 40 et 70 mg de KOH/gramme de résine.

3. Une composition de liant selon l'une des revendications 1 à 2, caractérisée en ce que l'agent de réticulation contient des aldéhydes ayant (1 - 20) atomes de carbone.

4. Une composition de liant selon l'une des revendications 1 à 3, caractérisée en ce que l'agent de réticulation est du formaldéhyde, du glutardialdéhyde ou un mélange de cela.

5. Un procédé de préparation d'une composition de liant comprenant le fait de combiner les étapes consistant à fournir une résine alkyde ayant des groupes carbanion, disperser ladite résine alkyde dans de l'eau afin d'obtenir une émulsion, et ajouter un composé aldéhyde à la dite émulsion, et dans lequel la taille de particules de l'émulsion est comprise entre 200 et 600 nm et le rapport molaire entre les groupes carbanion et lesdits groupes aldéhydes est compris entre 1 pour 1 et 3 pour 1.

6. Utilisation d'une composition de liant selon l'une des revendications 1 à 4 ou d'une composition de liant utilisant le procédé selon la revendication 6 pour la préparation de compositions de revêtement.

7. Revêtement à base d'une composition de liant selon l'une des revendications 1 à 4 ou revêtement à base d'une composition de liant obtenue en utilisant le procédé selon la revendication 6.

8. Substrat entièrement ou partiellement revêtu dans lequel on applique le revêtement selon la revendication 7.
